# EUROPÄISCHE PATENTSCHRIFT

(11) **EP 1 844 482 B1**
(45) Veröffentlichungstag und Bekanntmachung des Hinweises auf die Patenterteilung: **20.04.2016**
(21) Anmeldenummer: 06707755.2
(22) Anmeldetag: 19.01.2006
(51) Int. Cl.: H01F 38/30

(54) **RINGKERNSTROMWANDLER**
TOROIDAL CORE CURRENT TRANSFORMER
TRANSFORMATEUR TOROIDAL

(30) Priorität: 04.02.2005 DE 102005005445
(43) Veröffentlichungstag der Anmeldung: 17.10.2007
(73) Patentinhaber: Trench Germany GmbH, 96050 Bamberg (DE)
(72) Erfinder: PRUCKER, Udo, 90571 Schwaig (DE)
(74) Vertreter: Maier, Daniel Oliver
(86) Internationale Anmeldenummer: PCT/EP2006/050305
(87) Internationale Veröffentlichungsnummer: WO 2006/082139

(56) Entgegenhaltungen:
- EP-A- 0 650 236
- EP-A- 0 718 857
- DE-A1- 2 223 437
- DE-A1- 4 322 944
- DE-C2- 2 462 884
- US-A- 3 959 761
- US-A- 4 320 337
- PATENT ABSTRACTS OF JAPAN Bd. 005, Nr. 179 (E-082), 17. November 1981 (1981-11-17) -& JP 56 104422 A (MITSUBISHI ELECTRIC CORP), 20. August 1981 (1981-08-20)

## Beschreibung

Die Erfindung betrifft einen Ringkernstromwandler für den Einbau in eine metallgekapselte, druckgasisolierte Hochspannungsschaltanlage mit Rohrkapselung, wobei die sekundärbewickelten Ringkerne außerhalb der Rohrkapselung angeordnet sind.

Aus der DE 22 23 437 A1 ist eine Hochspannungsschaltanlage mit zwei Metallkapselgehäusen bekannt, in die ein Metallrohr eingeflanscht ist. Die Flansche tragen Isolierstoffringscheiben die stirnseitig von einem Isolierstoffzylinder dicht abgeschlossen sind, der auch als Tragkörper eines Stromwandlerkerns dient.

Aus der DE 24 62 884 C2 ist ein Messwandler für eine Hochspannungschaltanlage mit Metallkapselung bekannt. Der Messwandler, aus einem Eisenkern und einer Sekundärwicklung, wird in einem ringförmigen Hohlraum, an einer Stoßstelle einer Schaltanlage von Gehäuseteilen der Schaltanlage sowie einem Isolierrohr gebildet.

Aus der DE 43 22 944 A1 ist ein Stromwandler einer mit Schutzgas gefüllten Schaltanlage bekannt, mit einem auf Hochspannungspotential liegenden, als Primärwicklung dienenden, durchgehenden Leiter, welcher von gasdichten Kapselungsteilen umgeben ist. Zwischen zwei Kapselungsteilen, von denen eines als Träger für mindestens einen außen auf ihm angebrachten Ringkern mit Sekundärwicklungen dient, ist umlaufend eine gasdichte Isolierzwischenschicht angebracht. Die Isolierzwischenschicht bildet mit den benachbarten Kapselungsteilen einen Kondensator. Der Kondensator verbindet einen zwischen dem Ringkern und dem Leiter befindlichen Abschnitt des Trägers mit dem unmittelbar benachbarten Kapselungsteil. Der Kondensator ist so bemessen, dass dieser Abschnitt des Trägers ausschließlich für einen hochfrequenten Rückstrom weit oberhalb der Betriebsfrequenz stromführend ist, welcher von zwischen dem durchgehenden Leiter und den Kapselungsteilen laufenden, schnellen Wanderwellen herrührt. Außerhalb des Ringkerns ist mit dem Träger das dem Träger unmittelbar benachbarte Kapselungsteil verbunden, über eine mit steigender Frequenz schlechter leitende Stromführungseinrichtung.

Aus der US 3 959 761 ist ein Einleiterstromwandler bekannt, geeignet zur Installation in eine vollisolierte, metallgekapselte Hochspannungsschaltanlage. Die Kerne und Sekundärwicklungen des Stromwandlers sind allseitig von einer Umhüllung aus elektrisch isolierendem Material geschützt, deren Isolation für Niederspannungen bemessen ist. Die Hochspannungsisolation wird durch Isoliergas innerhalb der Kapselung der Hochspannungsschaltanlage gebildet, wobei die Isolierumhüllung selbst das Druckgehäuse für das Isoliergas bildet. In die Isolierumhüllung des Wandlers im Bereich ihrer inneren Umfangsfläche ist ein leitender oder halbleitender Belag eingebracht. Die Isolierumhüllung ist mit ihren Stirnseiten an Anschlussflansche der Metallkapselung befestigbar. Zur Stromrückführung und zur Herstellung einer Potentialverbindung sind mit dem leitenden oder halbleitenden Belag im äußeren Randbereich der Isolierumhüllung angeordnete, die Isolierumhüllung zwischen den Außenflanschen der Metallkapselung galvanisch überbrückende metallische Rohre eingeschlossen, in die mit den Anschlußflanschen der Metallkapselung verbindbare Befestigungsbolzen einsetzbar sind. Der beschriebene Aufbau ermöglicht einen geringen Montageaufwand und verhindert das Auftreten von Problemen bei der Durchführung der Sekundärausleitungen des Stromwandlers durch die Kapselung sowie der Auftrennung der Kapselung und Isolierung der aufgetrennten Kapselungsteile. Insbesondere wird gewährleistet, dass die Stromrückleitung in der äußeren Metallkapselung der Schaltanlage nicht unterbrochen ist, wobei auf störende, außerhalb des Einleiterstromwandlers liegende Überbrückungsschienen verzichtet werden kann.

Aus PATENT ABSTRACTS OF JAPAN Bd. 005, Nr. 179 (E-082), 17. November 1981 (1981-11-17) und JP 56 104422 A ist eine gasisolierte elektrische Vorrichtung bekannt, zur Vereinfachung der Montage und Demontage eines Stromwandlers durch Einbringung einer Gasabdichtungsfunktion in den Wandler selbst, wobei der Teil des Wandlers zur Montage mit kleinen Abmessungen vereinfacht wird.

Aus der DE 2 035 553 A1 ist ein Ringkernstromwandler für den Einbau in eine metallgekapselte, druckgasisolierte Hochspannungsschaltanlage mit Rohrkapselung bekannt, wobei die sekundärbewickelten Ringkerne außerhalb der Rohrkapselung angeordnet sind.

Die Rohrkapselung besteht im Bereich der Wandlerkerne aus zwei mindestens zum Teil ineinanderschiebbaren Kapselungsrohren, die derart ausgebildet sind, dass zwischen ihnen ein Ringspalt freibleibt, der mit Isolierstoff ausgefüllt ist, durch welchen die Kapselungsrohre zugleich gasdicht und mechanisch fest miteinander verbunden sind.

Diese Lösung weist den Vorteil auf, dass die Ringkerne und die Kapselungsrohre in ihren Durchmessern relativ gering gehalten werden können.

Nachteilig ist jedoch, dass zwei Kapselungsrohre benötigt werden, die über einen Teil ihrer Erstreckung koaxial zueinander angeordnet sind und durch die Isolierstoffschicht, nebst den endseitigen Dichtungen gasdicht miteinander zu verbinden sind. Dies vergrößert einerseits den Durchmesser des außenliegenden Kapselungsrohres und erfordert andererseits einen erheblichen Aufwand, um eine sichere, gasdichte Abdichtung zwischen den beiden Kapselungsrohren zu gewährleisten.

Der Erfindung liegt die Aufgabe zugrunde, einen derartigen Ringkernstromwandler für den Einbau in eine metallgekapselte, druckgasisolierte Hochspannungsschaltanlage so weiterzubilden, dass bei Verwendung nur eines einzigen Kapselungsrohres die Möglichkeit besteht, den Durchmesser dieses Ringkernstromwandlers auf ein Minimum zu reduzieren. Die Lösung dieser Aufgabe durch die Erfindung ist dadurch gekennzeichnet, dass als Träger für die Ringkerne ein rohrförmiges Isolierteil aus glasfaserverstärktem Kunststoff vorgesehen ist, auf das die Ringkerne aufschiebbar und mittels einer klebenden Isolierschicht an dem rohrförmigen Isolierteil befestigbar oder gegeneinander verspannbar sind, dass zumindest einer der beiden metallischen Flansche nachträglich mit dem rohrförmigen Isolierteil gasdicht verbunden wird und dass zur Stromrückführung im Bereich des rohrförmigen Isolierteils radial außerhalb der Ringkerne ein mit den beiderseitigen Flanschen verbindbarer rohrförmiger metallischer Leiter oder mehrere metallische Leiterteile vorgesehen sind.
Eine Weiterbildung der Erfindung sieht vor, dass die metallischen Flansche mit dem rohrförmigen Isolierteil durch Aufschrumpfen oder durch Kleben verbunden sind.
Von Vorteil ist es ferner, wenn die metallischen Leiterteile zur Stromrückführung als über den Umfang der metallischen Flansche gleichmäßig verteilte metallische Stangen, Schienen aus Aluminium oder aus Kupfer oder als gleichmäßig verteilte flexible Bänder ausgebildet sind.
Schließlich ist es günstig, wenn innerhalb des rohrförmigen Isolierteils eine metallische Abschirmelektrode vorgesehen ist, die lediglich mit einer der metallischen Flansche elektrisch leitend verbunden ist, wobei die metallische Abschirmelektrode als metallisches Rohr oder als metallisch innen beschichtetes Kunststoffrohr ausgebildet sein kann.
In der Zeichnung sind Ausführungsbeispiele der Erfindung dargestellt.

Es zeigen:
- Figur 1: einen Ringkernstromwandler 1 mit einer Klebeverbindung zwischen den Ringkernen 3,4,5 und dem rohrförmigen Isolierteil 6 und
- Figur 2: einen Ringkernstromwandler 1 mit einer mechanischen Spannverbindung zwischen den Ringkernen 3, 4, 5.

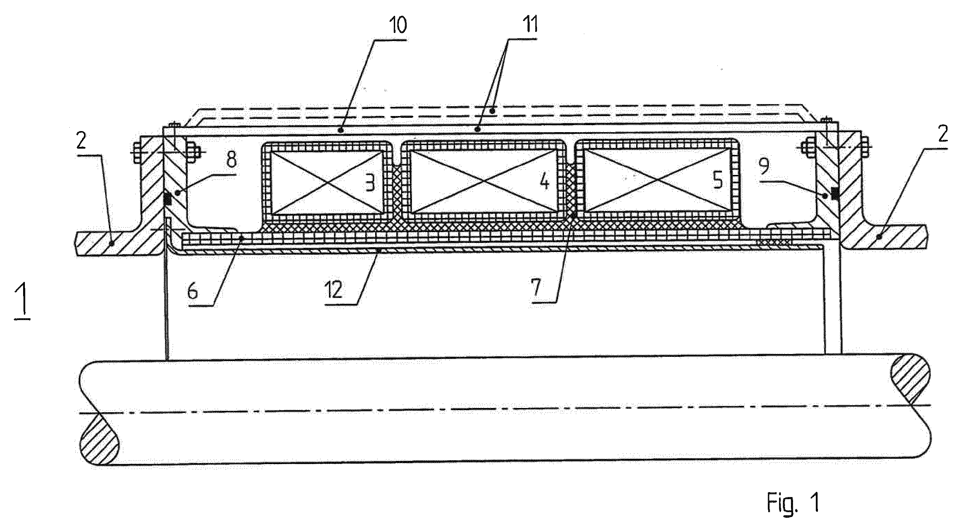

In Figur 1 ist der Ringkernstromwandler mit 1 bezeichnet. Die Rohrkapselung weist die Position 2 auf. Die drei sekundärbewickelten Ringkerne sind mit 3, 4, 5 bezeichnet. Die Positionsziffer 6 zeigt das rohrförmige Isolierteil, das vorzugsweise aus glasfaserverstärktem Kunststoff besteht.

Auf dieses rohrförmige Isolierteil 6 sind die Ringkerne 3, 4, 5 aufschiebbar und mittels einer klebenden Isolierschicht 7 an dem rohrförmigen Isolierteil 6 befestigt.

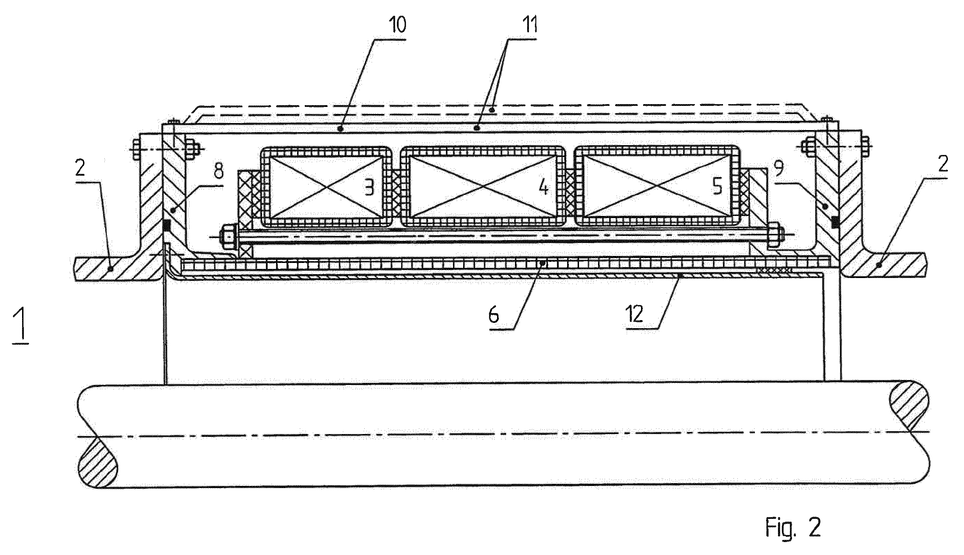

Als Alternative ist - wie aus Figur 2 ersichtlich - auch eine mechanische Schraubverspannung zwischen den Ringkernen 3, 4,5 möglich.

Zur Reduzierung des Außendurchmessers dieses Ringkernstromwandlers 1 auf ein Minimum ist es wichtig, dass zumindest einer der beiden metallischen Flansche 8, 9 nachträglich mit dem rohrförmigen Isolierteil 6 gasdicht verbunden wird.

Zur Stromrückführung im Bereich des rohrförmigen Isolierteils 6 ist radial außerhalb der Ringkerne 3, 4, 5 ein mit den beiderseitigen Flanschen 8, 9 verbindbarer rohrförmiger metallischer Leiter 10 vorgesehen. Wie in Figur 1 mit der Position 11 dargestellt, können auch mehrere metallische Leiterteile über den Umfang des Ringkernstromwandlers 1 vorgesehen sein.

Die metallischen Flansche 8, 9 sind mit dem rohrförmigen Isolierteil 6 bevorzugt durch Aufschrumpfen oder durch Kleben verbunden.

Die für die Stromrückführung vorgesehenen metallischen Leiterteile 10 bzw. 11 können als über den Umfang der metallischen Flansche 8, 9 gleichmäßig verteilte metallische Stangen, gleichmäßig verteilte Schienen aus Aluminium oder aus Kupfer oder als gleichmäßig verteilte flexible Bänder ausgebildet sein.

Innerhalb des rohrförmigen Isolierteils 6 ist eine metallische Abschirmelektrode 12 vorgesehen, die lediglich mit einer der metallischen Flansche 8, 9 elektrisch leitend verbunden ist.
Diese metallische Abschirmelektrode 12 ist bevorzugt als metallisches Rohr oder als metallisch innen beschichtetes Kunststoffrohr ausgebildet.

Die Ringkerne 3, 4, 5 mit den zugehörigen Sekundärwicklungen können im Falle der Anwendung einer klebenden Isolierschicht 7 gemeinsam mit dieser klebenden Isolierschicht 7 mit dem rohrförmigen Isolierteil 6 verbunden sein.

Wichtig für die vorliegende Erfindung ist, dass die sekundärbewickelten Kerne 3, 4, 5 vor der Montage eines der beiden metallischen Flansche 8, 9 auf das rohrförmige Isolierteil 6 aufgebracht und in der beschriebenen Weise mit diesem rohrförmigen Isolierteil 6 verbunden werden.

## Patentansprüche

1. Ringkernstromwandler (1) für den Einbau in eine metallgekapselte, druckgasisolierte Hochspannungsschaltanlage mit Rohrkapselung (2), wobei die sekundärbewickelten Ringkerne (3,4,5) außerhalb der Rohrkapselung (2) angeordnet sind, wobei als Träger für die Ringkerne (3,4,5) ein rohrförmiges Isolierteil (6) vorgesehen ist, auf das die Ringkerne (3, 4, 5) aufgeschoben sind, wobei zwei metallische Flansche (8,9) mit dem rohrförmigen Isolierteil (6) verbunden sind, wobei zumindest einer der beiden metallischen Flansche (8,9) nachträglich mit dem rohrförmigen Isolierteil (6) gasdicht verbunden wird, und wobei zur Stromrückführung im Bereich des rohrförmigen Isolierteils (6) radial außerhalb der Ringkerne (3,4,5) ein mit den beiderseitigen Flanschen (8,9) verbindbarer rohrförmiger metallischer Leiter (10) oder
mehrere metallische Leiterteile (11) vorgesehen sind, **dadurch gekennzeichnet, dass** das rohrförmige Isolierteil (6) aus glasfaserverstärktem Kunststoff besteht und die Ringkerne (3, 4, 5) mittels einer klebenden Isolierschicht (7) an dem rohrförmigen Isolierteil (6) befestigt sind.

2. Ringkernstromwandler (1) nach Anspruch 1, **dadurch gekennzeichnet, dass** die metallischen Flansche (8,9) mit dem rohrförmigen Isolierteil (6) durch Aufschrumpfen oder durch Kleben verbunden sind.

3. Ringkernstromwandler (1) nach Anspruch 1, **dadurch gekennzeichnet, dass** die metallischen Leiterteile (11) zur Stromrückführung als über den Umfang der metallischen Flansche (8,9) gleichmäßig verteilte metallische Stangen ausgebildet sind.

4. Ringkernstromwandler (1) nach Anspruch 1, **dadurch gekennzeichnet, dass** die metallischen Leiterteile (11) zur Stromrückführung als über den Umfang der metallischen Flansche (8,9) gleichmäßig verteilte Schienen aus Aluminium oder aus Kupfer ausgebildet sind.

5. Ringkernstromwandler (1) nach Anspruch 1, **dadurch gekennzeichnet, dass** die metallischen Leiterteile (11) zur Stromrückführung als über den Umfang der metallischen Flansche (8,9) gleichmäßig verteilte flexible Bänder ausgebildet sind.

6. Ringkernstromwandler (1) nach Anspruch 1, **dadurch gekennzeichnet, dass** innerhalb des rohrförmigen Isolierteils (6) eine metallische Abschirmelektrode (12) vorgesehen ist, die lediglich mit einem der metallischen Flansche (8,9) elektrisch leitend verbunden ist.

7. Ringkernstromwandler (1) nach Anspruch 6, **dadurch gekennzeichnet, dass** die metallische Abschirmelektrode (12) als metallisches Rohr oder als metallisch innen beschichtetes Kunststoffrohr ausgebildet ist.

## Claims

1. Toroidal core current transformer (1) for installation into a metal-encapsulated, compressed gas-insulated high-voltage switchgear installation, having a tubular encapsulation (2), wherein the secondarily wound toroidal cores (3, 4, 5) are arranged outside the tubular encapsulation (2), wherein a tubular insulating part (6) is provided as the support for the toroidal cores (3, 4, 5), the toroidal cores (3, 4, 5) being pushed onto the said tubular insulating part, wherein two metallic flanges (8, 9) are connected to the tubular insulating part (6), wherein at least one of the two metallic flanges (8, 9) is subsequently connected to the tubular insulating part (6) in a gas-tight manner, and wherein a tubular metallic conductor (10), which can be connected to the flanges (8, 9) on both sides, or a plurality of metallic conductor parts (11) are provided in the region of the tubular insulating part (6) radially outside the toroidal cores (3, 4, 5) for the purpose of returning current, **characterized in that** the tubular insulating part (6) is composed of a glass fibre-reinforced plastic, and the toroidal cores (3, 4, 5) are fastened to the tubular insulating part (6) by means of an adhesive insulating layer (7).

2. Toroidal core current transformer (1) according to Claim 1, **characterized in that** the metallic flanges (8, 9) are connected to the tubular insulating part (6) by shrink-fitting or by adhesive bonding.

3. Toroidal core current transformer (1) according to Claim 1, **characterized in that** the metallic conductor parts (11) for returning current are in the form of metallic bars which are uniformly distributed over the circumference of the metallic flanges (8, 9).

4. Toroidal core current transformer (1) according to Claim 1, **characterized in that** the metallic conductor parts (11) for returning current are in the form of aluminium or copper rails which are uniformly distributed over the circumference of the metallic flanges (8, 9).

5. Toroidal core current transformer (1) according to Claim 1, **characterized in that** the metallic conductor parts (11) for returning current are in the form of flexible strips which are uniformly distributed over the circumference of the metallic flanges (8, 9).

6. Toroidal core current transformer (1) according to Claim 1, **characterized in that** a metallic shielding electrode (12) is provided within the tubular insulating part (6), the said shielding electrode being electrically conductively connected only to one of the metallic flanges (8, 9).

7. Toroidal core current transformer (1) according to Claim 6, **characterized in that** the metallic shielding electrode (12) is in the form of a metallic tube or in the form of a plastic tube which is coated with metal on the inside.

## Revendications

1. Transformateur (1) toroïdal à monter dans une installation de distribution de haute tension, à blindage métallique et à isolation par du gaz sous pression, ayant un blindage (2) tubulaire, les noyaux (3, 4, 5) toroïdaux enroulés du côté secondaire étant disposés à l'extérieur du blindage (2) tubulaire, dans lequel il est prévu, comme support des noyaux (3, 4, 5) toroïdaux, une partie (6) isolante tubulaire, sur laquelle les noyaux (3, 4, 5) toroïdaux sont glissés, dans lequel
deux brides (8, 9) métalliques sont reliées à la partie (6) isolante tubulaire, au moins l'une des deux brides (8, 9) métalliques étant ultérieurement reliée d'une manière étanche au gaz à la partie (6) isolante tubulaire et, pour le retour du courant, il est prévu, dans la zone de la partie (6) isolante tubulaire, à l'extérieur radialement des noyaux (3, 4, 5) toroïdaux, un conducteur (10) métallique tubulaire pouvant être relié aux deux brides (8, 9) des deux côtés ou plusieurs parties (11) de conducteur métallique, **caractérisé en ce que** la partie (6) isolante tubulaire est en matière plastique renforcée par de la fibre de verre et les noyaux (3, 4, 5) toroïdaux sont fixés à la partie (6) isolante tubulaire au moyen d'une couche (7) isolante adhésive.

2. Transformateur (1) toroïdal suivant la revendication 1, **caractérisé en ce que** les brides (8, 9) métalliques sont reliées à la partie (6) isolante tubulaire par frettage ou par collage.

3. Transformateur (1) toroïdal suivant la revendication 1, **caractérisé en ce que** les parties (11) conductrices métalliques de retour du courant sont constituées sous la forme de barres métalliques réparties uniformément sur le pourtour des brides (8, 9) métalliques.

4. Transformateur (1) toroïdal suivant la revendication 1, **caractérisé en ce que** les parties (11) conductrices métalliques de retour du courant sont constituées sous la forme de rails en aluminium ou en cuivre répartis uniformément sur le pourtour des brides (8, 9) métalliques.

5. Transformateur (1) toroïdal suivant la revendication 1, **caractérisé en ce que** les parties (11) conductrices métalliques de retour du courant sont constituées sous la forme de rubans souples répartis uniformément sur le pourtour des brides (8, 9) métalliques.

6. Transformateur (1) toroïdal suivant la revendication 1, **caractérisé en ce qu'**il est prévu à l'intérieur de la partie (6) isolante tubulaire une électrode (12) métallique de blindage, qui est reliée d'une manière conductrice de l'électricité seulement à l'une des brides (8, 9) métalliques.

7. Transformateur (1) toroïdal suivant la revendication 6, **caractérisé en ce que** l'électrode (12) métallique de blindage est constituée sous la forme d'un tube métallique ou sous la forme d'un tube en matière plastique à revêtement métallique à l'intérieur.
